# EUROPÄISCHE PATENTSCHRIFT

(11) **EP 1 480 098 B1**
(45) Veröffentlichungstag und Bekanntmachung des Hinweises auf die Patenterteilung: **21.03.2007**
(21) Anmeldenummer: 04006511.2
(22) Anmeldetag: 18.03.2004
(51) Int. Cl.: G05D 16/04, F02M 37/00, F02M 69/00, F16K 15/18

(54) **Druckregler**
Pressure regulator
Regulateur de pression

(30) Priorität: 19.05.2003 DE 10322478
(43) Veröffentlichungstag der Anmeldung: 24.11.2004
(73) Patentinhaber: ROBERT BOSCH GMBH, 70442 Stuttgart (DE)
(72) Erfinder: Ittlinger, Ralph, 71287 Weissach (DE); Peetz, Andreas, 71640 Ludwigsburg (DE); Fees, Hans-Joerg, 74321 Bietigheim-Bissingen (DE); Haarer, Werner, 75428 Illingen (DE); Mora, Svatopluk, 37004 C. Budejovice (CZ); Rygl, Jaroslav, 37010 Borek (CZ)

(56) Entgegenhaltungen:
- DE-A- 10 107 223

## Beschreibung

### Stand der Technik

Die Erfindung geht aus von einem Druckregler, insbesondere für eine Kraftstoffversorgungsanlage einer Brennkraftmaschine, zum Regeln eines Flüssigkeitsdrucks, beinhaltend ein Ventil, welches ein durch die Wirkung einer Ventil-Blattfeder gegen einen von einem Ventilsitzträger getragenen Ventilsitz in Schließstellung gedrängtes Ventilschließglied umfaßt, wobei ein Arm der Ventil-Blattfeder am Ventilschließglied, der andere Arm an einem Stützglied eines Reglergehäuses abgestützt und die Ventil-Blattfeder im Reglergehäuse gelenkig gelagert gekontert ist, wobei der Ventilsitzträger als separates Bauteil mit dem Reglergehäuse verbunden ist, gemäß dem Oberbegriff von Anspruch 1, sowie von einem Verfahren zur Einstellung eines definierten Öffnungsdrucks des Druckreglers, nach dem Oberbegriff der Ansprüche 7 und 8.

Einen solchen Druckregler beschreibt die DE 101 07 223 A1. Die an dem Stützglied des Reglergehäuses abgestützte Ventil-Blattfeder ist vorgespannt, wobei die Vorspannkraft auf das Ventilschließglied als Schließkraft wirkt, so dass an der Ventil-Blattfeder Drehmomentgleichgewicht herrscht. Die gelenkige Lagerung der Ventil-Blattfeder überträgt die Kräfte auf das Reglergehäuse. Wenn an einem Druckeingang des Druckreglers Kraftstoffdruck herrscht, der groß genug ist, um eine gegenüber der auf die Ventilkugel wirkende Schließkraft größere Druckkraft zu erzeugen, hebt das Ventilschließglied vom Ventilsitz ab und gibt einen bestimmten Durchlaßquerschnitt frei, so daß Flüssigkeit, insbesondere Kraftstoff zu einem Druckausgang des Druckreglers strömen kann.

Der Öffnungsdruck des Ventils wird durch eine entsprechende Verformung des Stützglieds eingestellt, wobei Letzteres im Sinne einer feinfühligen Verstellung des Öffnungsdrucks einerseits leicht und feinstufig verformbar, andererseits aber auch so steif sein muss, dass die Stützkraft auch über einen längeren Zeitraum aufgebracht werden kann, was letztlich zu einem Zielkonflikt führt.

Darüber hinaus sollte zugunsten der Dauerfestigkeit der Ventil-Blattfeder bzw. des Ventilschließglieds ein im Bereich des Ventilschließglieds liegender Abschnitt der Ventil-Blattfeder möglichst senkrecht zur Achse des Ventilsitzes angeordnet sein. Um diese Ideallage zu erzielen, müssen sich die Fertigungs- und Montagetoleranzen an der Ventil-Blattfeder, am Reglergehäuse oder am Ventilschließglied in einem relativ engen Rahmen bewegen.

Der Ventilsitz des bekannten Ventils ist an einem zylindrischen Anschlußstück ausgebildet, welches in eine Öffnung des Reglergehäuses derart eingesetzt ist, dass ein endseitiger Ringbund des Anschlußstücks von innen an das Reglergehäuse anschlägt. Die Lage des Ventilsitzes relativ zur Ventil-Blattfeder ist folglich durch den Ringbund von vorneherein festgelegt und nicht veränderbar.

### Vorteile der Erfindung

Gemäß der kennzeichnenden Merkmale von Anspruch 1 ist die Verbindung zwischen dem Ventilsitzträger und dem Reglergehäuse demgegenüber derart ausgebildet, dass die Lage des Ventilsitzträgers relativ zur Ventil-Blattfeder in Richtung der Achse des Ventilsitzes beliebig veränderbar ist und der Ventilsitzträger in einer definierten Stellung festgelegt werden kann. Weil sich die Einstellbewegung des Ventilsitzträgers mittels des Ventilschließgliedes auf die Ventil-Blattfeder überträgt, kann durch Einstellen des Ventilsitzträgers zugleich die Lage und die Vorspannung der Ventil-Blattfeder verändert werden, was wiederum den Öffnungsdruck des Ventils beeinflusst. Je nachdem, in welcher Lage der Ventilsitzträger am Reglergehäuse festgelegt wird, ergibt sich folglich eine andere Vorspannung der Ventil-Blattfeder und folglich auch ein anderer Öffnungsdruck.

Gemäß den Merkmalen des Verfahrensanspruchs 7 kann der Druckregler durch axiales Verschieben des Ventilsitzträgers eingestellt werden. Daran anschließend erfolgt die Festlegung des Ventilsitzträgers in einer definierten Stellung. Dies bietet vorteilhafte Möglichkeiten zum beispielsweise sehr einfachen Einstellen des Öffnungsdrucks des Druckreglers und eine genaue Abstimmung der Positionen der Bauteile zueinander, zum Zweck einer guten Dauerhaltbarkeit des Druckreglers.

Durch die in den Unteransprüchen aufgeführten Maßnahmen sind vorteilhafte Weiterbildungen und Verbesserungen der im Patentanspruch 1 angegebenen Erfindung möglich.

Um die Lage des Ventilsitzträgers relativ zur Ventil-Blattfeder in Richtung der Achse des Ventilsitzes beliebig verändern und den Ventilsitzträger in einer definierten Stellung festlegen zu können, sind eine Vielzahl von Realisierungsmöglichkeiten denkbar.

Gemäß einer besonders bevorzugten Ausführungsform der Erfindung weist der Ventilsitzträger eine im Wesentlichen stufenlose Umfangsfläche auf, welche in eine Öffnung des Reglergehäuses eingreift. Beispielsweise wird der Ventilsitzträger durch eine im Wesentlichen zylindrische Buchse gebildet, an welcher einendseitig der Ventilsitz und anderendseitig ein Druckanschluss ausgebildet ist. Durch die glatte Umfangsfläche des Ventilsitzträgers kann dieser, durch die Öffnung geführt, in jede beliebige Stellung verschoben werden.

Gemäß besonders zu bevorzugenden Maßnahme ist der Ventilsitzträger in die Öffnung des Reglergehäuses eingepresst. Dies eröffnet die Möglichkeit, den Öffnungsdruck des Druckreglers abhängig von der Einpresstiefe des Ventilsitzträgers in der Öffnung des Reglergehäuses einzustellen.

Nach Justierung des Ventilsitzträgers in der gewünschten Stellung könnte er alternativ mit dem Reglergehäuse stoffschlüssig verbunden werden, beispielsweise durch Schweißen, Kleben oder Löten. Oder der Ventilsitzträger könnte mittels eines Gewindes gegenüber dem Reglergehäuse einstellbar und in definierter Lage festlegbar sein, zum Beispiel durch Kontermuttern.

Das Ausrichten der Lage des Ventilsitzträgers in Richtung der Achse des Ventilsitzes derart, dass ein im Bereich des Ventilschließglieds liegender Abschnitt der Ventil-Blattfeder senkrecht zur Achse des Ventilsitzes angeordnet ist, wirkt sich positiv auf die Dauerhaltbarkeit der Ventil-Blattfeder bzw. des Ventilschließglieds bzw. des Ventilsitzes aus. Ungeachtet der Toleranzen an den genannten Bauteilen kann diese Ideallage mittels des einstellbaren Ventilsitzträgers stets erzeugt werden, so dass für die Bauteile des Ventils auch größere Toleranzen zugelassen werden können, was sich günstig auf die Fertigungskosten des Druckreglers auswirkt.

Um einen definierten Öffnungsdruck des Ventils einzustellen, wird gemäß einem abhängigen Verfahrensanspruch die Lage des Ventilsitzträgers in Richtung der Achse des Ventilsitzes so lange verändert, bis sich eine dem gewünschten Öffnungsdruck entsprechende Schließkraft der Ventil-Blattfeder ergibt. Diese Art der Druckeinstellung ist äußerst einfach und kostengünstig. Da in diesem Fall das Stützglied nicht zur Druckeinstellung herangezogen werden braucht, kann es im Sinne einer hohen Dauerfestigkeit sehr steif ausgeführt werden.

Je nach dem, ob bei der Einstellung des Ventilsitzträgers anhand der Rechtwinkligkeit bezüglich der Ventil-Blattfeder oder bezüglich des Öffnungsdrucks eingestellt wird, kann der gewünschte Druck des Druckreglers auch beispielsweise durch plastisches Verformen des Stützglieds so eingestellt werden, dass auf das Ventilschließglied eine dem definierten Öffnungsdruck entsprechende Schließkraft der Ventil-Blattfeder erzeugt wird.

Die Reihenfolge des Einstellens kann auch so geschehen, dass zunächst beispielsweise die Achse des Ventilsitzes rechtwinklig zum entsprechenden Teil der Ventil-Blattfeder und anschließend daran der definierte Druck des Druckreglers, beispielsweise durch Verformen des Stützglieds, eingestellt werden.

### Zeichnungen

Ein Ausführungsbeispiel der Erfindung ist in der Zeichnung dargestellt und in der nachfolgenden Beschreibung näher erläutert. In den Figuren zeigt:
- Figur 1: eine Querschnittsdarstellung einer bevorzugten Ausführungsform eines Druckreglers gemäß der Erfindung;
- Figur 2: eine Draufsicht auf den Druckregler von Figur 1;

### Beschreibung des Ausführungsbeispiels

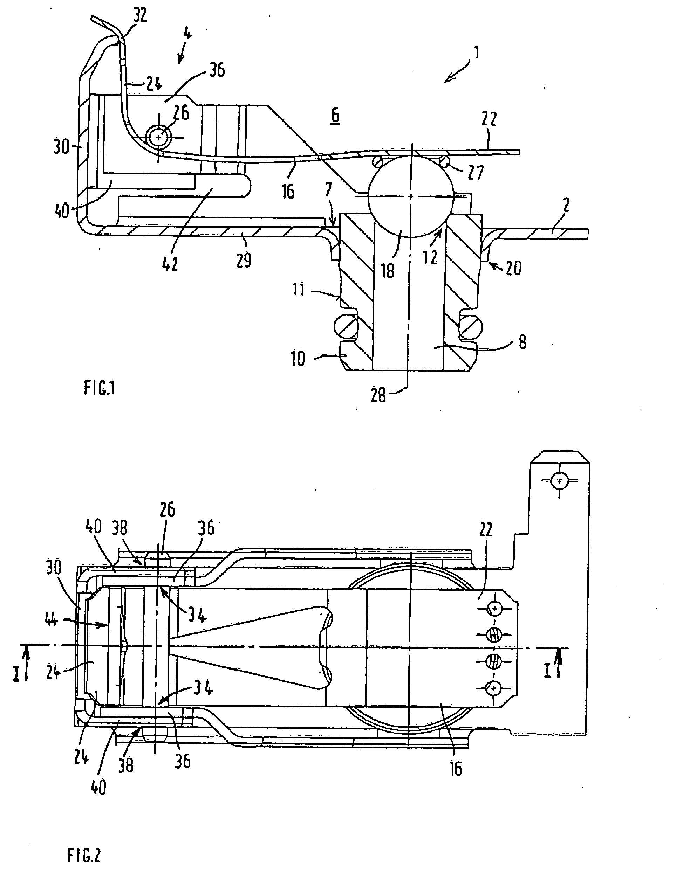

Der in Fig.1 insgesamt mit 1 bezeichnete und dort in einer Schließstellung dargestellte Druckregler ist gemäß einer bevorzugten Ausführungsform an einer aus Maßstabsgründen nicht dargestellten Tankeinbaueinheit oder Filtereinheit eines Kraftfahrzeugs montiert und dient zur Regelung des Kraftstoffdrucks im Kraftstoffsystem einer selbstzündenden Brennkraftmaschine.

Der Druckregler 1 hat ein offenes Reglergehäuse 2 mit L-förmigem Querschnitt, auf welches eine aus Übersichtlichkeitsgründen nicht gezeigte Haube aufgesetzt ist, in welcher ein lediglich durch einen Pfeil angedeuteter Druckausgang 4 ausgebildet ist, welcher einen Innenraum 6 des Reglergehäuses 2 mit dem Kraftstofftank verbindet. Bodenseitig ragt in eine Öffnung 7 des Reglergehäuses 2 ein einen Druckeingang 8 bildendes Anschlußstück 10, welches an eine nicht dargestellte Druckleitung des Kraftstoffsystems angeschlossen ist. Das Reglergehäuse 2 ist vorzugsweise ein einstückiges Stanzbiegeteil, in welches das Anschlußstück 10 eingesetzt ist. Alternativ könnte das Reglergehäuse 2 auch als Spritzgußteil gefertigt sein.

An dem vorzugsweise als zylindrische Buchse ausgeführten Anschlußstück 10 ist einendseitig ein Ventilsitz 12 mit einer Kegelfläche zur Zentrierung einer Ventilkugel 18 angeordnet. Der Kegelwinkel der Kegelfläche beträgt beispielsweise 60 Grad. Gegen den Ventilsitz 12 ist aufgrund der Wirkung einer Ventil-Blattfeder 16 die Ventilkugel 18 gedrängt. Die Ventil-Blattfeder 16, die Ventilkugel 18 und der Ventilsitz 12 bilden zusammen ein Überströmventil 20 des Druckreglers 1. Die Ventilkugel 18 kann aus Stahl, Keramik oder Kunststoff bestehen, ihr Durchmesser beträgt vorzugsweise 3 mm bis 12 mm. Anderendseitig weist das im wesentlichen eine zylindrische Buchse bildende Anschlußstück 10 eine Anschlußfläche 11 für eine Leitung oder Ähnliches auf.

Die Ventil-Blattfeder 16 hat vorzugsweise eine winkelige Form, bestehend aus zwei im wesentlichen zueinander rechtwinkelig verlaufenden Armen 22, 24 und ist um eine im Reglergehäuse 2 gelagerten Gelenkachse in Form eines Stifts 26 schwenkbar, welcher quer zur Längserstreckung der Ventil-Blattfeder 16 und senkrecht zu einer die Mittelachse 28 des Ventilsitzes 12 enthaltenden Ebene angeordnet ist. Der Stift 26 übergreift die Ventil-Blattfeder 16 und verläuft in etwa im Bereich der Abwinkelung der Ventil-Blattfeder 16, d.h. im Bereich einer gedachten Stoßlinie der beiden Arme 22, 24 der Ventil-Blattfeder 16. Die Gesamtlänge der aufgewickelten Ventil-Blattfeder beträgt beispielsweise 10 bis 40 mm, ihre Breite etwa 5 mm bis 20 mm. Der Abstand der Mittelachse 28 des Ventilsitzes 12 vom Stift 26 beträgt vorzugsweise 8 mm bis 35 mm.

Zwischen dem ventilsitzseitigen Arm 22 der Ventil-Blattfeder 16, der vorzugsweise senkrecht zur Mittelachse 28 des Ventilsitzes 12 verläuft, und der mit ihrem Scheitel die Ventil-Blattfeder 16 kontaktierenden Ventilkugel 18 ist ein Dämpfungsring 27 angeordnet. Genauer ragt die Ventilkugel 18 mit einem Kugelsegment ihrer zur Ventil-Blattfeder 16 weisenden Kugelhälfte in eine Ringöffnung des Dämpfungsringes 27 hinein und hält ihn dadurch an der Ventil-Blattfeder 16. Der Dämpfungsring 27 hat vorzugsweise einen kreisförmigem Querschnitt und besteht aus einem Kunststoff. Insbesondere kann der Dämpfungsring 27 durch einen durch spanabhebende Bearbeitung oder durch Spritzgießen hergestellten Kunststoff-Formling gebildet werden, dessen zur Ventilkugel 18 weisender Innenrand beispielsweise mit einer Fase versehen ist oder aber eine komplementär zur Ventilkugel 18 ausgebildete, kugelschichtförmige Sitzfläche aufweist. Der Dämpfungsring 27 kann anstatt aus Kunststoff auch aus einem anderen Material, beispielsweise auch aus Stahl oder aus einem Elastomer gefertigt sein. Entscheidend ist, daß sich im Betrieb zwischen dem Dämpfungsring 27, der Ventil-Blattfeder 16 und der Ventilkugel 18 Reibungskräfte bilden, welche einerseits ausreichend groß sind, um Schwingungsbewegungen der Ventilkugel 18 zu dämpfen, welche aber andererseits nicht so groß sind, daß die Zentrierung der Ventilkugel 18 im Ventilsitz 12 behindert wird, wenn das Überströmventil 20 schließt.

Durch die Abstützung des Armes 24 der Ventil-Blattfeder 16 an einem von einer Bodenplatte 29 des Reglergehäuses 2 senkrecht nach oben ragenden Stützglied in Form einer Querwand 30, der Abstützung des anderen Armes 22 an der Ventilkugel 18 und dem Übergriff der Ventil-Blattfeder 16 durch den Stift 26 im Bereich ihrer Abwinkelung wird in der Ventil-Blattfeder 16 eine Vorspannkraft hervorgerufen, welche am ventilsitzseitigen Arm 22 eine die Ventilkugel 18 gegen den Ventilsitz 12 drängende Kraft erzeugt. Entscheidend ist dabei auch die Lage des Stifts 26, welcher die Ventil-Blattfeder 16 gegen die Stützkräfte der Querwand 30 und der Ventilkugel 18 kontert. Weiterhin ergibt sich die Größe der aufgrund der Vorspannung der Ventil-Blattfeder 16 auf die Ventilkugel 18 als Reaktion kopfseitig wirkenden Schließkraft aufgrund der gewählten Hebelverhältnisse der beiden Arme 22, 24. An der Ventil-Blattfeder 16 herrscht dann Drehmomentgleichgewicht.

Um eine stabile Abstützung des Armes 24 der Ventil-Blattfeder 16 zu errreichen und um die Abstützkraft im wesentlichen senkrecht in den Arm 24 der Ventil-Blattfeder 16 einzuleiten, ist die Querwand 30 beispielsweise endseitig zur Ventil-Blattfeder 16 hin gebogen und greift in eine ebenfalls endseitige, nutartige und quer verlaufende Abkantung 32 des Arms 24 der Ventil-Blattfeder 16 ein. Da das Reglergehäuse 2 ein einstückiges Bauteil darstellt, ist auch die Querwand 30 mit der Bodenplatte 29 einstückig.

Die Lagerung des Stifts 26 im Reglergehäuse 2 erfolgt einerseits durch am besten anhand von Fig.2 sichtbaren Bohrungen 34 in die Ventil-Blattfeder 16 mit Parallelabstand umgreifenden und im wesentlichen senkrecht zum Stift 26 verlaufenden Seitenwänden 36 des Reglergehäuses 2, andererseits durch hierzu koaxiale Bohrungen 38 in diese Seitenwände 36 vorzugsweise von außen in Kontakt überlappenden und mit der Querwand 30 des Reglergehäuses 2 verbundenen Laschen 40. Diese Laschen 40 sind mit der Querwand 30 und damit mit dem Reglergehäuse 2 vorzugsweise einstückig ausgebildet sind und von der Querwand 30 senkrecht abgekantet. Anstatt einer Überlappung der Seitenwände 36 durch die Laschen 40 der Querwand 30 von außen könnten die Laschen 40 die Seitenwände 36 auch von innen her überlappend kontaktieren, d.h. dass die Laschen 40 innerhalb der Seitenwände 36 angeordnet und von diesen von außen her umgriffen sind.

Die Seitenwände des Reglergehäuses 2 werden vorzugsweise ebenfalls durch zwei weitere von der Bodenplatte 29 frei auskragende und abgekantete Laschen 36 gebildet, wie am besten Fig.1 zeigt. Zwischen einem zur Querwand 30 weisenden Abschnitt dieser Laschen 36 und der Bodenplatte 29 ist jeweils ein horizontaler Spalt 42 vorhanden, um diese Laschen 36 zueinander derart abgekröpfen zu können, dass sie einen Führungskanal 44 für die Ventil-Blattfeder 16 bilden (Fig.2). Genauer umschließen die Laschen 36 die Ventil-Blattfeder 16 zumindest im Bereich ihrer Abwinkelung mit geringem Spiel. Die Überlappung der Laschen 36, 40 erfolgt vorzugsweise im Bereich der Abkröpfung der Laschen 36. Die als Seitenwände fungierenden Laschen 36 sind außerdem mit den Bohrungen 34 für den Stift 26 versehen. Für die oben erwähnte Alternative, dass die Laschen 40 der Querwand 30 innen und die Laschen 36 der Seitenwände außen angeordnet sind, wird die Ventil-Blattfeder 16 unmittelbar durch die Laschen 40 der Querwand 30 geführt, welche dann den Führungskanal 44 zwischen sich bilden. Denkbar ist außerdem, dass der Führungskanal 44 sowohl durch die Laschen 40 als auch die Laschen 36 gebildet wird, indem auf jeder Seite beide Laschen 30, 40 bezogen auf die Längserstreckung des Führungskanals 44 abschnittsweise die Führungsfunktion übernehmen.

Die aufgrund der Spannung der Ventil-Blattfeder 16 auf die Querwand 30 wirkenden Querkräfte werden folglich über die Laschen 40 und mittels des Stifts 26 auf die als Seitenwände fungierenden Laschen 36 übertragen und von dort in die Bodenplatte 29 eingeleitet. Insbesondere werden die aufgrund der Abstützung der Ventil-Blattfeder 16 an der frei auskragenden Querwand 30 enstehenden Querkräfte als Zugkräfte auf die als Seitenwände fungierenden Laschen 36 übertragen. Der Stift 26 schafft hierbei als Übertragungsglied eine formschlüssige Verbindung zwischen den Laschen 40 der Querwand 30 und den als Seitenwände fungierenden Laschen 36, ohne dass die Laschen 36, 40 darüber hinaus miteinander verbunden sein müßten.

Die Verbindung zwischen dem Anschlußstück 10 und dem Reglergehäuse 2 ist allgemein derart ausgebildet ist, dass die Lage des Anschlußstücks 10 relativ zur Ventil-Blattfeder 16 in Richtung der Mittelachse 28 des Ventilsitzes 12 beliebig einstellbar und in einer definierten Stellung festlegbar ist. Um eine Einstellung des Anschlußstücks 10 in beiden Richtungen entlang der Mittelachse 28 des Ventilsitzes 12 zu ermöglichen, weist es zumindest im Bereich der Öffnung 7 des Reglergehäuses 2 eine im wesentlichen stufenlose Umfangsfläche auf. Besonders bevorzugt ist das Anschlußstück 10 in die Öffnung 7 des Reglergehäuses 2 eingepresst. Alternativ kann das Anschlußstück mit dem Reglergehäuse stoffschlüssig verbunden sein, beispielsweise durch Schweißen, Kleben oder Löten. Oder das Anschlußstück 10 könnte mittels eines Gewindes gegenüber dem Reglergehäuse einstellbar und in definierter Stellung festlegbar sein.

Vor der Inbetriebnahme des Druckreglers 1 muss der Öffnungsdruck des Überströfnventils 20 eingestellt werden. Dies wird gemäß einer ersten Alternative durch das Verändern der Lage des Anschlußstücks 10 in Richtung der Mittelachse 28 des Ventilsitzes 12 bewerkstelligt, bis sich eine dem gewünschten Öffnungsdruck entsprechende Schließkraft der Ventil-Blattfeder 16 ergibt. In dieser definierten Lage wird das Anschlußstück 10 dann in der Öffnung 7 gegenüber dem Reglergehäuse 2 fixiert, beispielsweise wie bereits oben erwähnt, durch Stoffschluß (Kleben, Löten, Schweißen etc.), durch Reibschluß (Einpressen etc.) oder durch Formschluß (Gewinde etc.)

Eine zweite Alternative sieht vor, zunächst die Lage des Anschlußstücks 10 in Richtung der Mittelachse 28 des Ventilsitzes 12 derart zu verändern, dass ein im Bereich der Ventilkugel 18 liegender Abschnitt der Ventil-Blattfeder 16 senkrecht zur Mittelachse 28 des Ventilsitzes 12 angeordnet ist. In dieser Lage wird das Anschlußstück 10 wiederum in der Öffnung 7 gegenüber dem Reglergehäuse 2 wie oben beschrieben fixiert. Im Anschluß wird die Querwand 30 derart gebogen, dass eine dem definierten Öffnungsdruck entsprechende Schließkraft der Ventil-Blattfeder 16 erzeugt wird.

Nach dem Einstellen des Öffnungsdrucks des Überströmventils 20 ist die Funktionsweise des Druckreglers 1 dann wie folgt : Wenn am Druckeingang 8 Kraftstoffdruck herrscht, der groß genug ist, um eine gegenüber der auf die Ventilkugel 18 wirkende Schließkraft größere Druckkraft zu erzeugen, hebt die Ventilkugel 18 vom Ventilsitz 12 ab und gibt einen bestimmten Durchlaßquerschnitt frei, so daß Kraftstoff in den Innenraum 6 des Reglergehäuses 2 und von dort zum Druckausgang 4 strömen kann. Aufgrund der elastischen Eigenschaften der Ventil-Blattfeder 16 steigt der Durchlaßquerschnitt mit größer werdendem Kraftstoffvolumen an, wobei die Druckdifferenz zwischen Druckeingang 8 und Druckausgang demgegenüber nur geringfügig und etwa linear ansteigt.

Die Erfindung ist jedoch nicht auf einen solchen Druckregler 1 beschränkt. Vielmehr kann es sich bei dem erfindungsgemäßen Druckregler auch um einen Druckregler handeln, bei welchem sich die Größe des Ausgangsdrucks von der des Eingangsdrucks unterscheidet und eingestellt werden kann.

## Patentansprüche

1. Druckregler, insbesondere für eine Kraftstoffversorgungsanlage einer Brennkraftmaschine, zum Regeln eines Flüssigkeitsdrucks, beinhaltend ein Ventil, welches ein durch die Wirkung einer Ventil-Blattfeder (16) gegen einen von einem Ventilsitzträger getragenen Ventilsitz (12) in Schließstellung gedrängtes Ventilschließglied (18) umfaßt, wobei ein Arm (22) der Ventil-Blattfeder (16) am Ventilschließglied (18), der andere Arm (24) an einem Stützglied (30) eines Reglergehäuses (2) abgestützt und die Ventil-Blattfeder (16) im Reglergehäuse (2) gelenkig gelagert ist, wobei der Ventilsitzträger (10) als separates Bauteil mit dem Reglergehäuse (2) verbunden ist, **dadurch gekennzeichnet, daß** die Verbindung zwischen dem Ventilsitzträger (10) und dem Reglergehäuse (2) derart ausgebildet ist, dass die Lage des Ventilsitzträgers (10) relativ zur Ventil-Blattfeder (16) in Richtung der Achse (28) des Ventilsitzes (12) beliebig veränderbar und der Ventilsitzträger (10) in einer definierten Stellung festlegbar ist.

2. Druckregler nach Anspruch 1, **dadurch gekennzeichnet, dass** der Ventilsitzträger (10) eine im wesentlichen stufenlose Umfangsfläche aufweist, welche in eine Öffnung (7) des Reglergehäuses (2) eingreift.

3. Druckregler nach Anspruch 2, **dadurch gekennzeichnet**, das der Ventilsitzträger (10) in die Öffnung (7) des Reglergehäuses (2) eingepresst ist.

4. Druckregler nach Anspruch 2, **dadurch gekennzeichnet, dass** der Ventilsitzträger (10) mit dem Reglergehäuse (2) stoffschlüssig verbunden ist.

5. Druckregler nach Anspruch 2, **dadurch gekennzeichnet, dass** der Ventilsitzträger (10) mittels eines Gewindes gegenüber dem Reglergehäuse (2) einstellbar und in definierter Lage festlegbar ist.

6. Druckregler nach wenigstens einem der vorhergehenden Ansprüche, **dadurch gekennzeichnet, dass** der Ventilsitzträger (10) durch eine im wesentlichen zylindrische Buchse gebildet wird, an welcher einendseitig der Ventilsitz (12) und anderendseitig eine Anschlußfläche (11) für einen Druckanschluß ausgebildet ist.

7. Verfahren zur Einstellung eines Druckreglers, insbesondere eines Druckreglers für eine Kraftstoffversorgungsanlage einer Brennkraftmaschine, zum Regeln eines flüssigkeitsdrucks, beinhaltend ein Ventil, welches ein durch die Wirkung einer Ventil-Blattfeder (16) gegen einen von einem Ventilsitzträger getragenen Ventilsitz (12) in Schließstellung gedrängtes Ventilschließglied (18) umfasst, wobei ein Arm (22) der Ventil-Blattfeder (16) am Ventilschließglied (18), der andere Arm (24) an einem Stützglied (30) eines Reglergehäuses (2) abgestützt und die Ventil-Blattfeder (16) im Reglergehäuse (2) gelenkig gelagert ist, wobei der Ventilsitzträger (10) als separates Bauteil mit dem Reglergehäuse (2) verbunden ist und die Verbindung zwischen dem Ventilsitzträger (10) und dem Reglergehäuse (2) derart ausgebildet ist, dass die Lage des Ventilsitzträgers (10) relativ zur Ventil-Blattfeder (16) in Richtung der Achse (28) des Ventilsitzes (12) beliebig veränderbar ist, wobei zur Einstellung des Druckreglers die Lage des Ventilsitzträgers (10) in Richtung der Achse (28) des Ventilsitzes (12) verstellt und der Ventilsitzträger (10) in einer definierten Stellung festgelegt wird.

8. Verfahren zur Einstellung eines Druckreglers nach Anspruch 7, **dadurch gekennzeichnet, dass** in einem Verfahrensschritt die Lage des Ventilsitzträgers (10) in Richtung der Achse (28) des Ventilsitzes (12) derart eingestellt wird, dass ein im Bereich des Ventilschließglieds (18) liegender Abschnitt der Ventil-Blattfeder (16) senkrecht zur Achse (28) des Ventilsitzes (12) angeordnet ist.

9. Verfahren zur Einstellung eines Druckreglers nach Anspruch 7 oder 8, **dadurch gekennzeichnet, dass** in einem Verfahrensschritt durch Verstellen des Ventilsitzträgers (10) in Richtung der Achse (28) des Ventilsitzes (12) der Öffnungsdrucks des Druckreglers (1) eingestellt wird.

10. Verfahren zur Einstellung eines Druckreglers nach einem der Ansprüche 7 bis 9, **dadurch gekennzeichnet, dass** in einem Verfahrensschritt das Stützglied (30) derart eingestellt wird, dass eine einem definierten Öffnungsdruck entsprechende Vorspannkraft der Ventil-Blattfeder (16) auf das Ventilschließglied (18) erzeugt wird.

## Claims

1. Pressure regulator, in particular for a fuel supply system of an internal combustion engine, for regulating a liquid pressure, containing a valve which comprises a valve-closing member (18) urged into a closing position due to the action of a valve leaf spring (16) towards a valve seat (12) carried by a valve-seat carrier, one arm (22) of the valve leaf spring (16) being supported on the valve-closing member (18) and the other arm (24) being supported on a supporting member (30) of a regulator housing (2), and the valve leaf spring (16) being mounted in the regulator housing (2) in an articulated manner, the valve-seat carrier (10) being connected as a separate component to the regulator housing (2), **characterized in that** the connection between the valve-seat carrier (10) and the regulator housing (2) is designed in such a way that the position of the valve-seat carrier (10) in relation to the valve leaf spring (16) can be varied, as desired, in the direction of the axis (28) of the valve seat (12) and the valve-seat carrier (10) can be secured in a defined position.

2. Pressure regulator according to Claim 1, **characterized in that** the valve-seat carrier (10) has an essentially stepless circumferential surface which engages into an orifice (7) of the regulator housing (2).

3. Pressure regulator according to Claim 2, **characterized in that** the valve-seat carrier (10) is pressed into the orifice (7) of the regulator housing (2).

4. Pressure regulator according to Claim 2, **characterized in that** the valve-seat carrier (10) is connected to the regulator housing (2) in a materially integral manner.

5. Pressure regulator according to Claim 2, **characterized in that** the valve-seat carrier (10) can by means of a thread be set with respect to the regulator housing (2) and be secured in a defined position.

6. Pressure regulator according to at least one of the preceding claims, **characterized in that** the valve-seat carrier (10) is formed by an essentially cylindrical bush, on which the valve seat (12) is formed on one end face and a connecting surface (11) for a pressure connection is formed on the other end face.

7. Method for setting a pressure regulator, in particular a pressure regulator for a fuel supply system of an internal combustion engine, for regulating a liquid pressure, containing a valve which comprises a valve-closing member (18) urged into a closing position due to the action of a valve leaf spring (16) towards a valve seat (12) carried by a valve-seat carrier, one arm (22) of the valve leaf spring (16) being supported on the valve-closing member (18) and the other arm (24) being supported on a supporting member (30) of a regulator housing (2), and the valve leaf spring (16) being mounted in the regulator housing (2) in an articulated manner, the valve-seat carrier (10) being connected as a separate component to the regulator housing (2), and the connection between the valve-seat carrier (10) and the regulator housing (2) being designed in such a way that the position of the valve-seat carrier (10) in relation to the valve leaf spring (16) can be varied, as desired, in the direction of the axis (28) of the valve seat (12), to set the pressure regulator the position of the valve-seat carrier (10) being adjusted in the direction of the axis (28) of the valve seat (12) and the valve-seat carrier (10) being secured in a defined position.

8. Method for setting a pressure regulator according to Claim 7, **characterized in that**, in one method step, the position of the valve-seat carrier (10) is set in the direction of the axis (28) of the valve seat (12) in such a way that a portion of the valve leaf spring (16) which lies in the region of the valve-closing member (18) is arranged perpendicularly to the axis (28) of the valve seat (12).

9. Method for setting a pressure regulator according to Claim 7 or 8, **characterized in that**, in one method step, the opening pressure of the pressure regulator (1) is set by the adjustment of the valve-seat carrier (10) in the direction of the axis (28) of the valve seat (12).

10. Method for setting a pressure regulator according to one of Claims 7 to 9, **characterized in that**, in one method step, the supporting member (30) is set in such a way that a prestressing force of the valve leaf spring (16), corresponding to a defined opening pressure, is generated on the valve-closing member (18).

## Revendications

1. Régulateur de pression, en particulier pour un système d'alimentation en carburant d'un moteur à combustion interne, pour réguler une pression de liquide, comprenant une soupape qui présente un obturateur de soupape (18) poussé dans la position de fermeture par l'effet d'un ressort à lame (16) contre un siège de soupape (12) porté par un support de siège, un bras (22) du ressort à lame (16) étant en appui sur l'obturateur (18), l'autre bras (24) étant en appui sur un organe d'appui (30) d'un boîtier de régulateur (2) et le ressort à lame (16) étant logé de façon articulée dans le boîtier de régulateur (2), le support de siège (10) étant relié, en tant que composant séparé, au boîtier de régulateur (2),
**caractérisé en ce que**
la liaison entre le support de siège (10) et le boîtier de régulateur (2) est conçue pour faire varier à souhait la position du support de siège (10) par rapport au ressort à lame (16) en direction de l'axe (28) du siège de soupape (12) et fixer le support de siège (10) dans une position définie.

2. Régulateur de pression selon la revendication 1,
**caractérisé en ce que**
le support de siège de soupape (10) présente une surface périphérique essentiellement sans paliers qui s'engage dans une ouverture (7) du boîtier de régulateur (2).

3. Régulateur de pression selon la revendication 2,
**caractérisé en ce que**
le support de siège de soupape (10) est pressé dans l'ouverture (7) du boîtier de régulateur (2).

4. Régulateur de pression selon la revendication 2,
**caractérisé en ce que**
le support de siège de soupape (10) est relié au boîtier de régulateur (2) par complémentarité de matières.

5. Régulateur de pression selon la revendication 2,
**caractérisé en ce que**
le support de siège de soupape (10) peut être réglé et fixé au moyen d'un filet dans une position définie par rapport au boîtier de régulateur (2).

6. Régulateur de pression selon au moins l'une des revendications précédentes,
**caractérisé en ce que**
le support de siège de soupape (10) est formé par une douille essentiellement cylindrique qui présente d'un côté le siège de soupape (12) et de l'autre côté une surface de raccordement (11) pour une alimentation en pression.

7. Procédé de réglage d'un régulateur de pression, en particulier d'un régulateur de pression pour un système d'alimentation en carburant d'un moteur à combustion interne, pour réguler une pression de liquide, comprenant une soupape qui présente un obturateur de soupape (18) poussé dans la position de fermeture par l'effet d'un ressort à lame (16) contre un siège de soupape (12) porté par un support de siège, un bras (22) du ressort à lame de soupape (16) étant en appui sur l'obturateur (18), l'autre bras (24) étant en appui sur un organe d'appui (30) d'un boîtier de régulateur (2) et le ressort à lame (16) étant logé de façon articulée dans le boîtier de régulateur (2), selon lequel le support (10) est un composant séparé, relié au boîtier de régulateur (2), et la liaison entre le support de siège (10) et le boîtier de régulateur (2) est conçue pour pouvoir varier à souhait la position du support de siège de soupape (10) par rapport au ressort à lame (16) en direction de l'axe (28) du siège de soupape (12), et pour régler le régulateur de pression on déplace la position du support de siège (10) en direction de l'axe (28) du siège de soupape (12) et on fixe le support de siège (10) dans une position définie.

8. Procédé de réglage d'un régulateur de pression selon la revendication 7,
**caractérisé en ce que**
dans une étape de procédé on règle la position du support de siège (10) en direction de l'axe (28) du siège de soupape (12) de sorte qu'un segment du ressort à lame (16) situé dans la zone de l'obturateur (18) se trouve perpendiculaire à l'axe (28) du siège de soupape (12).

9. Procédé de réglage d'un régulateur de pression selon la revendication 7 ou 8,
**caractérisé en ce que**
dans une étape de procédé on règle la pression d'ouverture du régulateur de pression (1) en déplaçant le support de siège (10) en direction de l'axe (28) du siège de soupape (12).

10. Procédé de réglage d'un régulateur de pression selon l'une quelconque des revendications 7 à 9,
**caractérisé en ce que**
dans une étape de procédé on règle l'organe d'appui (30) pour générer une force de précontrainte du ressort à lame (16) sur l'obturateur de soupape (18) correspondant à une pression d'ouverture définie.
